# EUROPÄISCHE PATENTSCHRIFT

(11) **EP 2 501 005 B1**
(45) Veröffentlichungstag und Bekanntmachung des Hinweises auf die Patenterteilung: **12.04.2017**
(21) Anmeldenummer: 12151956.5
(22) Anmeldetag: 20.01.2012
(51) Int. Cl.: H02G 7/20

(54) **Freileitungseinrichtung, insbesondere für Hochspannungsfreileitungen**
Overhead line device, in particular for high voltage overhead lines
Installation de ligne aérienne, notamment pour lignes aériennes à haute tension

(30) Priorität: 18.03.2011 DE 102011001400
(43) Veröffentlichungstag der Anmeldung: 19.09.2012
(73) Patentinhaber: SAG GmbH, 63225 Langen (DE)
(72) Erfinder: Pohlmann, Heinrich, 64390 Erzhausen (DE)
(74) Vertreter: Rohmann, Michael

(56) Entgegenhaltungen:
- DE-C- 621 873
- US-A- 5 175 442
- US-A1- 2001 052 732
- US-A1- 2010 064 598
- STEWART GRANT: "High phase order ready for application", IEEE TRANSACTIONS ON POWER APPARATUS AND SYSTEMS, Bd. PAS-101, Nr. 2, 6. Juni 1982 (1982-06-06), Seiten 1757-1767, XP001700487, new york

## Beschreibung

Die Erfindung betrifft eine Freileitungseinrichtung, insbesondere für Hochspannungsfreileitungen, - mit einer Mehrzahl von Masten und zwischen den Masten verlaufenden und an den Masten fixierten Leiterseilen. Bei den Leiterseilen handelt es sich insbesondere um Phasenseile eines Drehstromsystems.

Freileitungseinrichtungen der vorstehend genannten Art sind aus der Praxis in verschiedenen Ausführungsformen bekannt. Das gilt insbesondere auch für sogenannte 2-systemige Leitungen mit zwei Stromkreisen bzw. zwei Drehstromsystemen. Seit einigen Jahren existiert ein Bundesemissionsschutzgesetz, mit dem die zulässigen Feldstärken für Wohngebiete und dergleichen in der Nähe von Freileitungen begrenzt werden. In der Vergangenheit konnten diese Anforderungen durch Einhaltung eines größeren Abstandes zu Wohngebieten und dergleichen oder durch höhere Masten erfüllt werden. Seit einiger Zeit werden aber in einigen Ländern die zulässigen Feldstärken weiter herabgesetzt, so dass es immer schwieriger wird, zugelassene Freileitungseinrichtungen mit üblichen Masten zu errichten. Übliche Masten weisen häufig einen vertikalen Mastschaft auf sowie zumindest eine quer zum Mastschaft angeordnete Traverse an der die Leiterseile bzw. Phasenseile über Isolatoren aufgehängt sind.

Aus US 2010/0064598 A1 ist eine Freileitungseinrichtung der eingangs genannten Art bekannt. Es sind zumindest zwei Drehstromsysteme A und A' mit jeweils drei Phasen A, B, C bzw. A', B', C' vorhanden. Jeder Phase ist ein Leiterseil zugeordnet und die Leiterseile sind im Querschnitt in Form eines Polygons angeordnet. Die Leiterseile zumindest eines Drehstromsystems A mit einer Phasenfolge A, B, C sind im Rechtsdrehsinn angeordnet. Die Leiterseile zumindest eines Drehstromsystems A' mit einer Phasenfolge A', B', C' sind im Linksdrehsinn angeordnet. Eine ähnliche Freileitungseinrichtung ist auch aus US 2001/0052732 A1 bekannt.

Der Erfindung liegt das technische Problem zugrunde, eine Freileitungseinrichtung der eingangs genannten Art anzugeben, bei der im Betrieb möglichst geringe Feldstärken im Bereich bzw. im Bodenbereich der Freileitungseinrichtung gemessen werden.

Zur Lösung dieses technischen Problems lehrt die Erfindung eine Freileitungseinrichtung, insbesondere für Hochspannungsfreileitungen, - mit einer Mehrzahl von Masten und mit zwischen den Masten verlaufenden und an den Masten fixierten Leiterseilen bzw. Phasenseilen,
wobei zwei Drehstromsysteme A und B bzw. zumindest zwei Drehstromkreise mit jeweils drei Phasen L_{1A}, L_{2A}, L_{3A} bzw. L_{1B}, L_{2B}, L_{3B} vorhanden sind, wobei jeder Phase ein Leiterseil zugeordnet ist,
wobei die Leiterseile der Drehstromsysteme im Querschnitt in Form eines Polygons angeordnet sind, wobei in diesem Polygon die Leiterseile zumindest eines Drehstromsystems A mit einer Phasenfolge L_{1A}, L_{2A}, L_{3A} im Rechtsdrehsinn angeordnet sind und wobei die Leiterseile zumindest eines Drehstromsystems B mit einer Phasenfolge L_{1B}, L_{2B}, L_{3B} im Linksdrehsinn angeordnet sind
und wobei an den Ecken des Polygons abwechselnd Leiterseile des einen Drehstromsystems A und des anderen Drehstromsystems B angeordnet sind.

Leiterseil meint im Rahmen der Erfindung auch ein für eine Phase eines Drehstromsystems eingesetztes Leiterseilbündel. Es liegt im Rahmen der Erfindung, dass die Anzahl der bei der erfindungsgemäßen Freileitungseinrichtung eingesetzten Leiterseile stets ein Vielfaches von 3 beträgt. Für die Anzahl der Leiterseile gilt also 3 · x (x = ganze Zahl).

Erfindungsgemäß sind die Leiterseile der Freileitungseinrichtung im Querschnitt in Form eines Polygons angeordnet. Querschnitt meint dabei insbesondere den Querschnitt quer zur Leitungsrichtung bzw. zur Längsrichtung der Freileitungseinrichtung und die Leiterseile sind in diesem Querschnitt auf den Ecken des Polygons angeordnet.

Dass die Leiterseile eines Drehstromsystems A mit einer Phasenfolge im Rechtsdrehsinn angeordnet sind, meint im Rahmen der Erfindung, dass die Phasen L_{1A}, L_{2A}, L_{3A} im Uhrzeigersinn aufeinander folgen. Dass die Leiterseile eines Drehstromsystems B mit einer Phasenfolge im Linksdrehsinn angeordnet sind, meint dementsprechend, dass die Phasen L_{1B}, L_{2B}, L_{3B} entgegen dem Uhrzeigersinn aufeinander folgen. Es liegt somit im Rahmen der Erfindung, dass zwei entgegengesetzte Drehfelder vorhanden sind. Es liegt weiterhin im Rahmen der Erfindung, dass die Anzahl der Drehstromsysteme mit einer Phasenfolge im Rechtsdrehsinn der Anzahl der Drehstromsysteme mit einer Phasenfolge im Linksdrehsinn entspricht. Wie weiter unten noch ausgeführt, sind vorzugsweise lediglich zwei Drehstromsysteme vorhanden, und zwar ein Drehstromsystem mit einer Phasenfolge im Rechtsdrehsinn und ein Drehstromsystem mit einer Phasenfolge im Linksdrehsinn.

Nach bevorzugter Ausführungsform der Erfindung ist das Polygon zumindest im Bereich der Masten ein gleichseitiges und gleichwinkliges Polygon. Wie oben bereits dargelegt, sind die Leiterseile auf den Ecken eines solchen regelmäßigen Polygons angeordnet. Eine besonders bevorzugte Ausführungsform ist dadurch gekennzeichnet, dass das Polygon ein Sechseck ist, und zwar insbesondere zumindest im Bereich der Masten ein gleichseitiges und gleichwinkliges Sechseck. Zweckmäßigerweise sind zwei Drehstromsysteme A und B mit sechs Leiterseilen vorgesehen und die sechs Leiterseile sind vorzugsweise im Querschnitt auf den Ecken eines Sechseckes bzw. eines gleichseitigen und gleichwinkligen Sechseckes angeordnet. Bevorzugt ist also eine sogenannte 2-systemige Leitung mit zwei Drehstromsystemen. Erfindungsgemäß sind an den Ecken des Polygons abwechselnd bzw. alternierend Leiterseile des einen Drehstromsystems A und Leiterseile des anderen Drehstromsystems B angeordnet. An einer Ecke des Polygons ist also eine Phase bzw. ein Leiterseil des einen Drehstromsystems A vorhanden und an der zu dieser ersten Ecke benachbarten Ecke ist eine Phase bzw. ein Leiterseil des anderen Drehstromsystems B vorhanden und so weiter fort.

Es liegt im Rahmen der Erfindung, dass die Drehstromsysteme bzw. die beiden Drehstromsysteme A und B die gleiche Spannung bzw. im Wesentlichen die gleiche Spannung und die gleiche Stromstärke bzw. im Wesentlichen die gleiche Stromstärke aufweisen. Der Erfindung liegt insoweit die Erkenntnis zugrunde, dass eine erfindungsgemäße Anordnung mit zwei gegensinnigen Drehfeldern zu einer Minimierung der Feldstärken im Bodenbereich der Freileitungseinrichtung führt. Die gegensinnigen Drehfelder heben sich gleichsam gegenseitig auf.

Gemäß einer sehr empfohlenen Ausführungsform der Erfindung weisen die Masten der Freileitungseinrichtung jeweils zumindest ein Ringelement auf und die Leiterseile bzw. Phasenseile sind zweckmäßigerweise über Isolatoren innerhalb des Ringelementes aufgehängt. Es ist bevorzugt, dass ein Ringelement den oberen Bereich eines Mastes bzw. den Mastkopf bildet. Empfohlenermaßen sind die genannten Isolatoren für das Aufhängen der Leiterseile über den Innenumfang des Ringelementes verteilt und an der Innenseite des Ringelementes angeschlossen. Vorzugsweise weisen die an der Innenseite des Ringelementes angeschlossenen Isolatoren gleiche Abstände zueinander auf. Eine sehr empfohlene Ausführungsform ist dadurch gekennzeichnet, dass ein Ringelement eines Mastes einen kreisförmigen bzw. einen in etwa kreisförmigen Querschnitt aufweist. Es liegt im Rahmen der Erfindung, dass im Bereich eines Mastes bzw. in dem Ringelement eines Mastes zwischen den einzelnen Leiterseilen bzw. Phasenseilen Isolatoren als Abstandshalter angeordnet sind. Der Abstand zwischen den Leiterseilen bzw. Phasenseilen beträgt zweckmäßigerweise 4 bis 5 m, beispielsweise 4,50 m.

Eine bevorzugte Ausführungsform der Erfindung ist dadurch gekennzeichnet, dass im Bereich zwischen zwei Masten an zumindest einer Stelle Phasenabstandshalter zwischen den Leiterseilen bzw. Phasenseilen zur Reduzierung der Abstände zwischen den Leiterseilen bzw. Phasenseilen angeordnet sind. Grundsätzlich ist im Bereich zwischen den Masten ein größerer Abstand zwischen den Leiterseilen erforderlich, da insbesondere aufgrund von Windbeeinflussungen Pendelbewegungen der Leiterseile auftreten können. Mit den genannten Phasenabstandshaltern können jedoch die Abstände zwischen den Leiterseilen in vorteilhafter Weise reduziert werden und die Leiterseile dennoch auf Abstand gehalten werden. Dabei hat es sich besonders bewährt, dass die Phasenabstandshalter an zwei Stellen zwischen den Masten vorgesehen werden, und zwar mit der Maßgabe, dass die Leiterseile zwischen diesen Masten durch die Phasenabstandshalter gleichsam in drei gleich lange Teilabschnitte unterteilt werden. Dadurch wird mit dem Gewicht der Phasenabstandshalter eine sogenannte Punktlast auf die Leiterseile ausgeübt, so dass in der Mitte der Leiterseile zwischen zwei Masten der tiefste Punkt der Leiterseile angehoben wird.

Um eine Reparatur an einem von zwei Drehstromsystemen durchführen zu können, wird bei den aus der Praxis bekannten Freileitungseinrichtungen lediglich dieses eine Drehstromsystem abgeschaltet, während das zweite Drehstromsystem unter Spannung steht. Das ist bei diesen bekannten Freileitungseinrichtungen aufgrund der Anordnung der Leiterseile und aufgrund der relativ großen Abstände zwischen den Leiterseilen kein Problem. Bei der erfindungsgemäßen Anordnung der Leiterseile und bei der erfindungsgemäßen Phasenfolge wäre es aufgrund der geringen Abstände schwierig, Reparaturmaßnahmen an einem abgeschalteten Drehstromsystem durchzuführen, während die benachbarten Leiterseile bzw. Phasen des zweiten Drehstromsystems unter Spannung stehen. Deshalb ist nach einer besonders bevorzugten Ausführungsform der Erfindung eine Umschalteinrichtung vorgesehen, durch deren Betätigung die Phasen von zumindest zwei Leiterseilen vertauschbar sind, so dass die Leiterseile eines Drehstromsystems A in einem Teilbereich des Polygons bzw. Sechsecks und die Leiterseile des anderen Drehstromsystems B in einem anderen Teilbereich des Polygons bzw. Sechsecks angeordnet sind. Dann ist mehr Freiraum für Reparaturmaßnahmen an dem abgeschalteten Drehstromsystem vorhanden und das zweite unter Spannung stehende Drehstromsystem stört dabei nicht. Das wird weiter unten noch anhand eines konkreten Ausführungsbeispiels näher erläutert.

Der Erfindung liegt die Erkenntnis zugrunde, dass mit der erfindungsgemäßen Freileitungseinrichtung und mit der erfindungsgemäßen Anordnung der Leiterseile bzw. Phasenseile die Feldspannung im Bodenbereich der Freileitungseinrichtung beachtlich reduziert bzw. minimiert werden kann. Aus diesem Grunde müssen bei der erfindungsgemäßen Freileitungseinrichtung im Vergleich zu aus dem Stand der Technik bekannten Freileitungseinrichtungen bestimmte Einschränkungen nicht in Kauf genommen werden, wie beispielsweise ein großer Abstand zu Wohngebieten und dergleichen. Im Vergleich zu aus der Praxis bekannten Freileitungseinrichtungen können auch Masten mit geringerer Höhe vorgesehen werden, so dass das Landschaftsbild mit einer erfindungsgemäßen Freileitungseinrichtung weniger verunstaltet wird. Aufgrund der bevorzugten im Rahmen der Erfindung vorgesehenen Phasenabstandshalter für die Leiterseile zwischen den Masten können die Abstände der Leiterseile reduziert werden und hierdurch wird die für die erfindungsgemäße Freileitungseinrichtung erforderliche Trasse in vorteilhafter Weise schmaler als bei bekannten Freileitungseinrichtungen. Im Ergebnis dürfte die Akzeptanz bezüglich einer erfindungsgemäßen Freileitungseinrichtung deutlich größer sein als bei bislang bekannten Freileitungseinrichtungen und somit dürfte die Genehmigung für eine erfindungsgemäße Freileitungseinrichtung einfacher zu erhalten sein.

Nachfolgend wir die Erfindung anhand einer lediglich ein Ausführungsbeispiel darstellenden Zeichnung näher erläutert. Es zeigen in schematischer Darstellung:

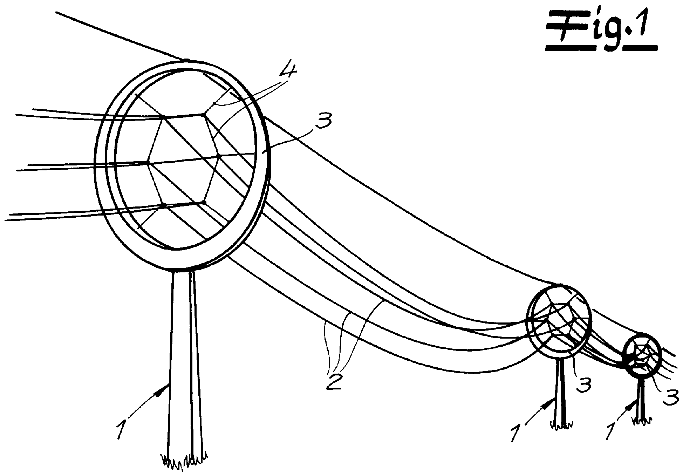

- Fig. 1: eine perspektivische Darstellung einer erfindungsgemäßen Freileitungseinrichtung,
- Fig. 2: eine Ansicht eines Mastes einer erfindungsgemäßen Freileitungseinrichtung,
- Fig. 3: den Gegenstand nach Fig. 2 aus Richtung des Pfeiles A und
- Fig. 4: den Gegenstand gemäß Fig. 3 in einer anderen Ausführungsform.

Die Figuren zeigen eine erfindungsgemäße Freileitungseinrichtung für Hochspannungsfreileitungen mit einer Mehrzahl von Masten 1 und mit zwischen den Masten 1 verlaufenden und an den Masten fixierten Leiterseilen 2 (auch Phasenseile genannt). Im Ausführungsbeispiel nach den Figuren sind für die erfindungsgemäße Freileitungseinrichtung zwei Drehstromsysteme A und B mit jeweils drei Phasen L_{1A}, L_{2A}, L_{3A} bzw. L_{1B}, L_{2B}, L_{3B} vorgesehen. Dabei ist jeder dieser Phasen ein Leiterseil 2 zugeordnet. Somit sind sechs Leiterseile vorhanden, die im Querschnitt in Form eines Sechseckes angeordnet sind, wobei die Leiterseile auf den Ecken des Sechseckes liegen. Zumindest im Bereich der Masten 1 ist dieses Sechseck vorzugsweise als gleichseitiges und gleichwinkliges Sechseck ausgebildet.

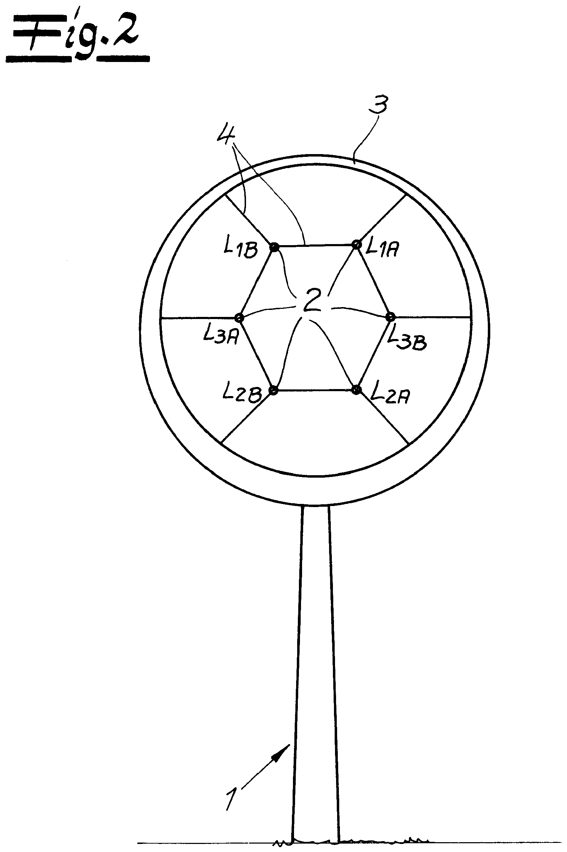

An den Ecken des Sechseckes sind abwechselnd bzw. alternierend Leiterseile 2 bzw. Phasen des einen Drehstromsystems A und des anderen Drehstromsystems B angeordnet. In dem Sechseck sind die Leiterseile 2 des Drehstromsystems A mit der Phasenfolge L_{1A}, L_{2A}, L_{3A} im Rechtsdrehsinn angeordnet und die Leiterseile 2 des zweiten Drehstromsystems B sind mit der Phasenfolge L_{1B}, L_{2B}, L_{3B} im Linksdrehsinn angeordnet. Bei den Phasen L_{1A}, L_{2A}, L_{3A} ergibt sich also eine Phasenfolge im Uhrzeigersinn und bei den Phasen L_{1B}, L_{2B}, L_{3B} eine Phasenfolge entgegen dem Uhrzeigersinn (s. insbesondere Fig. 2). Es sind also zwei gegensinnige Drehfelder vorhanden. Es liegt im Rahmen der Erfindung, dass die beiden Drehstromsysteme A und B die gleiche Spannung und die gleiche Stromstärke aufweisen. Das führt bei der erfindungsgemäßen Anordnung mit zwei gegensinnigen Drehfeldern zu einer Minimierung der Feldstärken im Bodenbereich der Freileitungseinrichtung. Die Drehfelder heben sich gleichsam gegenseitig auf.

Im oberen Bereich weisen die Masten 1 der erfindungsgemäßen Freileitungseinrichtung vorzugsweise und im Ausführungsbeispiel jeweils zumindest ein Ringelement 3 mit kreisförmigen Querschnitt auf und Leiterseile 2 sind über Isolatoren 4 innerhalb des Ringelementes 3 aufgehängt. Dabei sind die Isolatoren 4 über den Innenumfang des Ringelementes verteilt mit gleichen Abständen zueinander angeordnet. In dem Ringelement 3 eines Mastes 1 sind vorzugsweise und im Ausführungsbeispiel zwischen den einzelnen Leiterseilen 2 ebenfalls Isolatoren 4 als Abstandshalter angeordnet. Die erfindungsgemäße Freileitungseinrichtung weist nach einer bevorzugten Ausführungsform eine nicht dargestellte Umschalteinrichtung auf, durch deren Betätigung die Phasen L_{3A} und L_{3B} der mittleren Leiterseile 2 vertauschbar sind. Auf diese Weise sind die Phasen L_{1A}, L_{2A}, L_{3A} des ersten Drehstromsystems A in der einen Hälfte des Sechseckes angeordnet und die Phasen L_{1B}, L_{2B}, L_{3B} des zweiten Drehstromsystems B sind in der anderen Hälfte des Sechseckes angeordnet. Dadurch ergeben sich ausreichende Freiräume für Reparaturmaßnahmen an lediglich einem Drehstromsystem A oder B. Wenn derartige Reparaturmaßnahmen beispielsweise an dem Drehstromsystem A vorgenommen werden, muss dieses Drehstromsystem A abgeschaltet werden und das Drehstromsystem B kann nichtsdestoweniger in Betrieb bzw. unter Spannung bleiben.

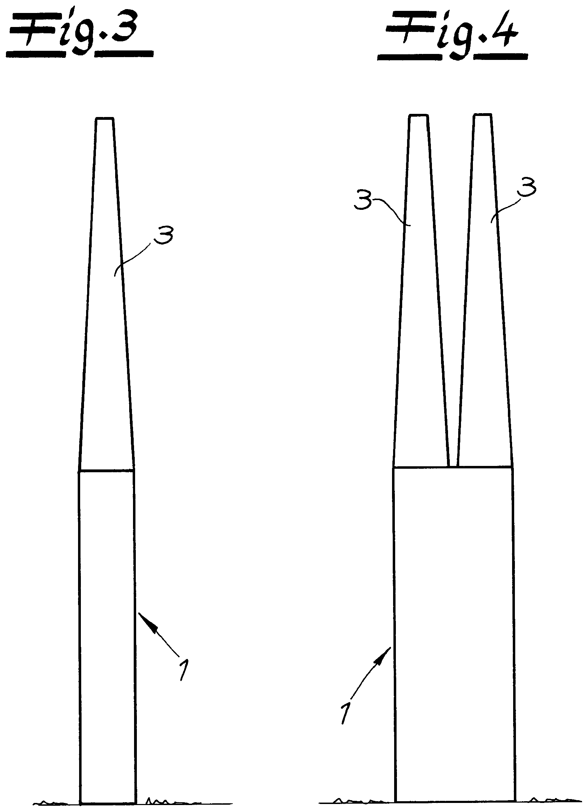

Fig. 3 zeigt im Übrigen einen als Tragmast ausgebildeten Mast 1 der Freileitungseinrichtung, wobei dieser Tragmast lediglich ein Ringelement 3 aufweist. Dagegen zeigt die Fig. 4 einen als Abspannmast ausgebildeten Mast 1 der Freileitungseinrichtung, wobei dieser Abspannmast mit zwei Ringelementen 3 ausgerüstet ist.

## Patentansprüche

1. Freileitungseinrichtung, insbesondere für Hochspannungsfreileitungen, - mit einer Mehrzahl von Masten (1) und mit zwischen den Masten (1) verlaufenden und an den Masten fixierten Leiterseilen (2),
wobei zwei Drehstromsysteme A und B mit jeweils drei Phasen L_{1A}, L_{2A}, L_{3A} bzw. L_{1B}, L_{2B}, L_{3B} vorhanden sind, wobei jeder Phase ein Leiterseil (2) zugeordnet ist,
wobei die Leiterseile (2) im Querschnitt in Form eines Polygons angeordnet sind, wobei die Leiterseile zumindest eines Drehstromsystems A mit einer Phasenfolge L_{1A}, L_{2A}, L_{3A} im Rechtsdrehsinn angeordnet sind und wobei die Leiterseile zumindest eines Drehstromsystems B mit einer Phasenfolge L_{1B}, L_{2B}, L_{3B} im Linksdrehsinn angeordnet sind
, **dadurch gekennzeichnet dass**
an den Ecken des Polygons abwechselnd Leiterseile (2) des einen Drehstromsystems A und des anderen Drehstromsystems B angeordnet sind.

2. Freileitungseinrichtung nach Anspruch 1, wobei das Polygon zumindest im Bereich der Masten (1) ein gleichseitiges und/oder gleichwinkliges Polygon ist.

3. Freileitungseinrichtung nach einem der Ansprüche 1 oder 2, wobei das Polygon ein Sechseck, insbesondere zumindest im Bereich der Masten (1) ein gleichseitiges und/oder gleichwinkliges Sechseck ist.

4. Freileitungseinrichtung nach einem der Ansprüche 1 bis 3, wobei zwei Drehstromsysteme A und B mit sechs Leiterseilen (2) vorgesehen sind und wobei die sechs Leiterseile (2) vorzugsweise im Querschnitt auf den Ecken eines Sechseckes angeordnet sind.

5. Freileitungseinrichtung nach einem der Ansprüche 1 bis 4, wobei die Drehstromsysteme bzw. die beiden Drehstromsysteme A und B die gleiche Spannung bzw. im Wesentlichen die gleiche Spannung und die gleiche Stromstärke bzw. im Wesentlichen die gleiche Stromstärke aufweisen.

6. Freileitungseinrichtung nach einem der Ansprüche 1 bis 5, wobei die Masten (1) der Freileitungseinrichtung jeweils zumindest ein Ringelement (3) aufweisen und wobei die Leiterseile (2) über Isolatoren (4) innerhalb des Ringelementes (3) aufgehängt sind.

7. Freileitungseinrichtung nach einem der Ansprüche 1 bis 6, wobei im Bereich eines Mastes (1) bzw. in dem Ringelement (3) des Mastes (1) zwischen den Leiterseilen (2) Isolatoren (4) als Abstandshalter angeordnet sind.

8. Freileitungseinrichtung nach einem der Ansprüche 1 bis 7, wobei im Bereich zwischen zwei Masten (1) an zumindest einer Stelle Phasenabstandshalter zwischen den Leiterseilen (2) vorgesehen sind.

9. Freileitungseinrichtung nach einem der Ansprüche 1 bis 8, wobei zumindest eine Umschalteinrichtung vorgesehen ist, durch deren Betätigung die Phasen von zumindest zwei Leiterseilen (2) vertauschbar sind, so dass vorzugsweise die Leiterseile (2) zumindest eines Drehstromsystems in einem Teilbereich des Polygons und die Leiterseile (2) zumindest eines anderen Drehstromsystems in einem weiteren Teilbereich des Polygons angeordnet sind.

## Claims

1. An overhead line arrangement, in particular for high-voltage overhead lines, with a plurality of masts (1) and with stranded conductors (2) that run between the masts (1) and are fixed to the masts,
wherein two three-phase systems A and B each with three phases L_{1A}, L_{2A}, L_{3A} or L_{1B}, L_{2B}, L_{3B} are present, wherein each phase has allocated to it a stranded conductor (2),
wherein the stranded conductors (2) are cross sectionally arranged in the form of a polygon, wherein the stranded conductors of at least one three-phase system A are arranged in a clockwise direction with a phase sequence of L_{1A}, L_{2A}, L_{3A}, and wherein the stranded conductors of at least one three-phase system B are arranged in a counterclockwise direction with a phase sequence L_{1B}, L_{2B}, L_{3B}, **characterized in that** stranded conductors (2) of the one three-phase system A and the other three-phase system B are alternatingly arranged on the corners of the polygon.

2. The overhead line arrangement according to claim 1, wherein the polygon is a unilateral and/or equiangular polygon, at least in the region of the masts (1).

3. The overhead line arrangement according to one of claims 1 or 2, wherein the polygon is a hexagon, in particular a unilateral and/or equiangular hexagon, at least in the region of the masts (1).

4. The overhead line arrangement according to one of claims 1 to 3, wherein two three-phase systems A and B are provided with six stranded conductors (2), and wherein the six stranded conductors (2) are preferably cross sectionally arranged on the corners of a hexagon.

5. The overhead line arrangement according to one of claims 1 to 4, wherein the three-phase systems or two three-phase systems A and B exhibit the same voltage or essentially the same voltage and the same amperage or essentially the same amperage.

6. The overhead line arrangement according to one of claims 1 to 5, wherein the masts (1) of the overhead line arrangement each exhibit at least one annular element (3), and wherein the stranded conductors (2) are suspended inside of the annular element (3) via isolators (4).

7. The overhead line arrangement according to one of claims 1 to 6, wherein isolators (4) are arranged as spacers in the region of a mast (1) or in the annular element (3) of the mast (1) between the stranded conductors (2).

8. The overhead line arrangement according to one of claims 1 to 7, wherein phase spacers are provided between the stranded conductors (2) in the region between two masts (1) at least at one location.

9. The overhead line arrangement according to one of claims 1 to 8, wherein at least one switching device is provided, whose actuation makes it possible to interchange the phases of at least two stranded conductors (2), so that preferably the stranded conductors (2) of at least one three-phase system are located in a partial region of the polygon, and the stranded conductors (2) of at least one other three-phase system are located in another partial region of the polygon.

## Revendications

1. Dispositif de ligne aérienne, en particulier pour des lignes aériennes haute tension, avec une pluralité de mâts (1) et avec des câbles conducteurs (2) s'étendant entre les mâts (1) tout en étant fixés aux mâts,
dans lequel il est prévu deux systèmes triphasés A et B présentant respectivement trois phases L₁A, L₂A, L₃A ou L₁B, L₂B, L₃B, un câble conducteur (2) étant attribué à chaque phase,
dans lequel les câbles conducteurs (2) sont disposés en forme de polygone dans la section transversale, les câbles conducteurs d'au moins un système triphasé A étant agencés avec une séquence de phases L₁A, L₂A, L₃A dans le sens de rotation vers la droite, et les câbles conducteurs d'au moins un système triphasé B sont agencés avec une séquence de phases L₁B, L₂B, L₃B dans le sens de rotation vers la gauche,
**caractérisé en ce que** dans les coins du polygone, des câbles conducteurs (2) d'un système triphasé A et de l'autre système triphasé B sont disposés en alternance.

2. Dispositif de ligne aérienne selon la revendication 1, dans lequel le polygone est un polygone équilatéral et/ou régulier, du moins dans la région des mâts (1).

3. Dispositif de ligne aérienne selon l'une des revendications 1 ou 2, dans lequel le polygone est un hexagone, en particulier un hexagone équilatéral et/ou régulier, du moins dans la région des mâts (1).

4. Dispositif de ligne aérienne selon l'une des revendications 1 à 3, dans lequel il est prévu deux systèmes triphasés A et B avec six câbles conducteurs (2), et dans lequel les six câbles conducteurs (2) sont disposés de préférence sur les coins d'un hexagone dans la section transversale.

5. Dispositif de ligne aérienne selon l'une des revendications 1 à 4, dans lequel les systèmes triphasés ou les deux systèmes triphasés A et B présentent la même tension ou quasiment la même tension et la même intensité de courant ou quasiment la même intensité de courant.

6. Dispositif de ligne aérienne selon l'une des revendications 1 à 5, dans lequel les mâts (1) du dispositif de ligne aérienne présentent respectivement au moins un élément annulaire (3), et dans lequel les câbles conducteurs (2) sont suspendus à l'intérieur de l'élément annulaire (3) par des isolateurs (4).

7. Dispositif de ligne aérienne selon l'une des revendications 1 à 6, dans lequel des isolateurs (4) sont disposés en tant qu'espaceurs entre les câbles conducteurs (2) dans la région d'un mât (1) ou dans l'élément annulaire (3) du mât (1).

8. Dispositif de ligne aérienne selon l'une des revendications 1 à 7, dans lequel des espaceurs de phases sont prévus au moins à un endroit entre les câbles conducteurs (2) dans la région entre deux mâts (1).

9. Dispositif de ligne aérienne selon l'une des revendications 1 à 8, dans lequel il est prévu au moins un dispositif de commutation, dont l'actionnement permet d'intervertir les phases d'au moins deux câbles conducteurs (2), de telle façon que les câbles conducteurs (2) d'au moins un système triphasé sont de préférence disposés dans une région partielle du polygone et les câbles conducteurs (2) d'au moins un autre système triphasé sont disposés dans une autre région partielle du polygone.
